# EUROPEAN PATENT SPECIFICATION

(11) **EP 3 000 668 B1**
(45) Date of publication and mention of the grant of the patent: **03.04.2019**
(21) Application number: 15153803.0
(22) Date of filing: 04.02.2015
(51) Int. Cl.: B60T 7/06, G05G 1/42

(54) **Motor vehicle pedal and motor vehicle having the same**
Kraftfahrzeugpedal und Motorfahrzeug damit
Pédale de véhicule automobile et véhicule automobile ayant la même

(30) Priority: 19.08.2014 CN 201410409481
(43) Date of publication of application: 30.03.2016
(73) Proprietor: Beiqi Foton Motor Co., Ltd., Beijing 102206 (CN)
(72) Inventor: Jin, Dawei, Changping District Beijing (CN); Yang, Yaning, Changping District Beijing (CN)
(74) Representative: Grünecker Patent- und Rechtsanwälte PartG mbB

(56) References cited:
- DE-U1- 20 022 852
- FR-A1- 2 844 226
- KR-A- 20040 028 194
- US-A- 3 301 088
- US-A1- 2003 084 749
- US-B1- 6 367 348
- US-B1- 6 367 349

## Description

### BACKGROUND

### Technical Field

The present invention relates to the field of motor vehicles, and in particular, to a motor vehicle pedal and a motor vehicle having the same.

### Related Art

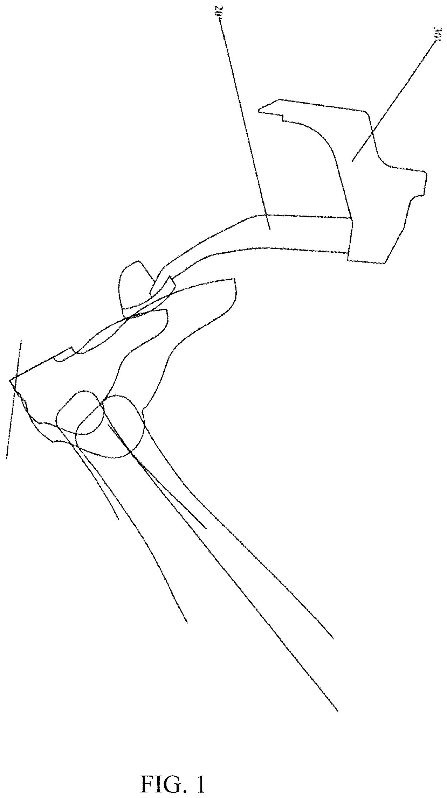

As shown in FIG. 1, a motor vehicle pedal in the prior art includes a pedal arm 20' and a fixed bearing 30' used for fixing the pedal arm 20'. In the prior art, a position of the pedal arm 20' relative to the fixed bearing 30' is relatively unchanged. In addition, during design, a height of the motor vehicle pedal is generally designed according to that of 95% of male bodies. For females, due to their smaller soles, when they tread on motor vehicle pedals of the same height, the comfort is poorer.

Motor vehicle pedals with adjustable length by using worm-gear assembly are known e.g. from FR 2 844 226 A1, US 2003/084749 A1 and DE 200 22 852 U1. US 3,301,088 A dated back to 1964 discloses a motor vehicle pedal according to the preamble of claim 1 with adjustable length, whereby the pedal is arranged to be stepped in the axial direction, so that no shear force is generated.

### SUMMARY

The present invention aims to provide a motor vehicle pedal and a motor vehicle having the same, so as to achieve an objective of providing a more compact motor vehicle pedal.

In order to achieve the foregoing objective, the present invention provides a motor vehicle pedal according to claim 1 and a motor vehicle according to claim 2.

By using the motor vehicle pedal of the present invention, a pedal arm is divided into a first pedal arm and a second pedal arm, and the second pedal arm is adjustably disposed on the first pedal arm, which can change a height of the motor vehicle pedal relative to a chassis surface of a motor vehicle by adjusting a relative position between the first pedal arm and the second pedal arm, so that different consumer groups can perform adjustment according to their own usage habits, thereby achieving an objective of improving the comfort of the motor vehicle pedal.

Further, the motor vehicle pedal further includes a drive assembly, and the drive assembly is in drive connection with the second pedal arm.

Further, the drive assembly includes a worm assembly and a worm-gear assembly, two ends of the worm assembly are respectively connected to the first pedal arm and the second pedal arm, the worm assembly drives the second pedal arm to move, and the worm-gear assembly is in drive cooperation with the worm assembly.

Further, the first pedal arm is provide with an axial through hole, the second pedal arm includes a connecting end, and the connecting end is disposed inside the axial through hole and is cooperatively connected to the worm assembly.

Further, the connecting end is provide with an arc transitional portion, and the worm assembly (41) is rotatably disposed in the arc transitional portion, and is capable of driving the second pedal arm to extend outward from the axial through hole or retract into the axial through hole.

Further, the motor vehicle pedal includes a self-locking state of locking the worm assembly and the worm-gear assembly.

Further, the drive assembly further includes a drive motor, and a motor shaft of the drive motor is fixedly connected to the worm-gear assembly, so as to drive the worm-gear assembly to rotate.

Further, an opening portion is disposed on an outer side wall of the first pedal arm, and the worm-gear assembly extends inward from the opening portion and is in drive connection with the worm assembly.

Further, an accommodating space used for accommodating the drive motor is disposed on an outer side surface of the first pedal arm, and the opening portion and the accommodating space are correspondingly disposed.

The present invention further provides a motor vehicle, including the foregoing motor vehicle pedal.

By using the motor vehicle pedal of the present invention, a pedal arm is divided into a first pedal arm and a second pedal arm, and the second pedal arm is adjustably disposed on the first pedal arm, which can change a height of the motor vehicle pedal relative to a chassis surface of a motor vehicle by adjusting a relative position between the first pedal arm and the second pedal arm, so that different consumer groups can perform adjustment according to their own usage habits, thereby achieving an objective of improving the comfort of the motor vehicle pedal.

### BRIEF DESCRIPTION OF THE DRAWINGS

The accompanying drawings in this specification which constitute a part of this application are intended to provide further understanding of the present invention. Exemplary embodiments of the present invention and description thereof are intended to explain the present invention, without constituting an improper limit to the present invention. In the accompanying drawings:
FIG. 1 is a schematic structural diagram of a motor vehicle pedal in the prior art;
FIG. 2 is a schematic structural diagram of a motor vehicle pedal according to an embodiment of the present invention; and
FIG. 3 is a partially enlarged schematic structural diagram of a motor vehicle pedal according to an embodiment of the present invention.

Reference numerals in the drawings: 10. first pedal arm; 11. axial through hole; 12. accommodating space; 20. second pedal arm; 30. fixed bearing; 40. drive assembly; 41 worm assembly; 42. worm-gear assembly; and 43. drive motor.

### DETAILED DESCRIPTION

It should be noted that embodiments in this application and features in the embodiments can be combined without any conflict. The present invention is described in detail with reference to accompanying drawings and in combination with the embodiments in the following.

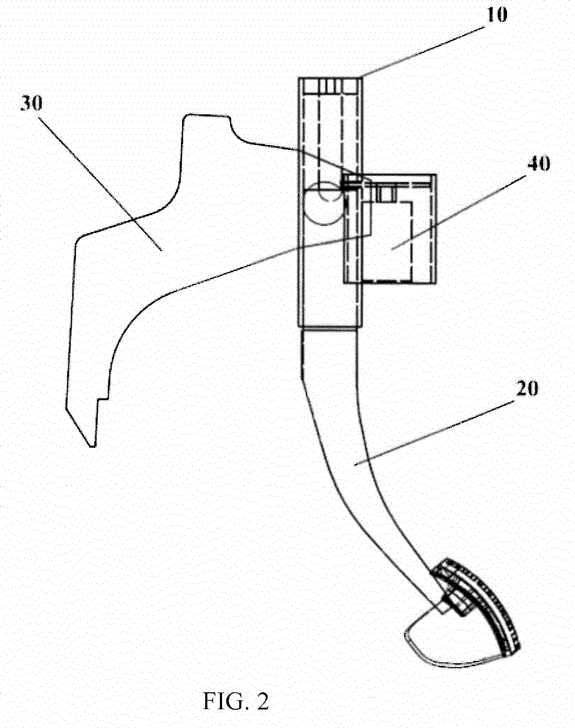

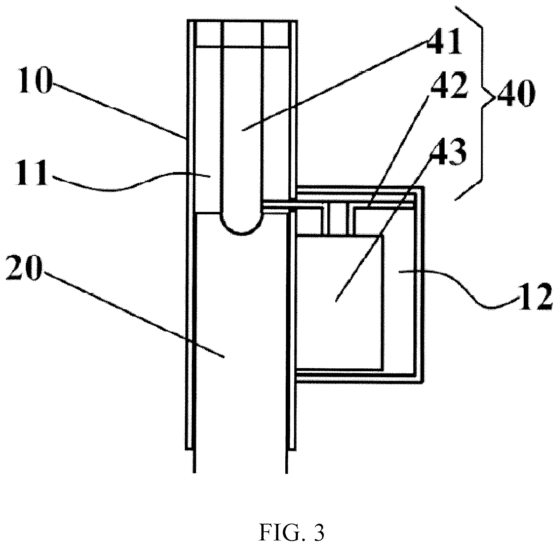

As shown in FIG. 2 and FIG. 3, an embodiment of the present invention provides a motor vehicle pedal, including: a fixed bearing 30 and a pedal arm, where the foregoing pedal arm includes a first pedal arm 10 and a second pedal arm 20. The foregoing first pedal arm 10 is detachably disposed on the fixed bearing 30, for pushing the fixed bearing 30 to move. The foregoing second pedal arm 20 is sheathed in the first pedal arm 10 and is adjustably disposed along an extending direction of the first pedal arm 10.

The pedal arm is divided into the first pedal arm 10 and the second pedal arm 20, the second pedal arm 20 is adjustably disposed on the first pedal arm 10, which can change a height of the motor vehicle pedal relative to a chassis surface of a motor vehicle by adjusting a relative position between the first pedal arm 10 and the second pedal arm 20, so that different consumer groups can perform adjustment according to their own usage habits, thereby achieving an objective of improving the comfort of the motor vehicle pedal.

Specifically, a first end of the first pedal arm 10 is connected to the foregoing fixed bearing 30, a second end of the first pedal arm 10 extends vertically downward along a direction shown in FIG. 2 and FIG. 3, and the foregoing first pedal arm 10 is set to a tubular structure and has an axial through hole 11. The foregoing second pedal arm 20 includes a connecting end and a pedal end, where the connecting end extends into the interior of the axial through hole 11 from the second end of the first pedal arm 10. The foregoing pedal end is located at a side opposite to the connecting end and on the second pedal arm 20, and the foregoing pedal end is disposed outside the axial through hole 11 and bends towards a direction away from the fixed bearing 30, so as to facilitate the treading of a user. Certainly, during, the present invention is not limited to the foregoing single installation manner. For example, the axial through hole 11 may further be provided on the second pedal arm 20, and the first pedal arm 10 is disposed inside the axial through hole 11.

It should be noted that in order that the first pedal arm 10 and the second pedal arm 20 will not separate during use, in this embodiment, a first limiting portion may be disposed on an inner surface of the second end of the first pedal arm 10, and a second limiting portion cooperating with the first limiting portion may be disposed at the connecting end of the second pedal arm 20. When the second pedal arm 20 moves to the foregoing limiting portion, the second pedal arm 20 cannot keep moving. Likewise, in order to prevent the second pedal arm 20 from penetrating outward from the first end of the first pedal arm 10, in this embodiment of the present invention, a third limiting portion for limiting in cooperation with the second limiting portion may further be disposed at the first end of the first pedal arm 10.

Preferably, the motor vehicle pedal further includes a drive assembly 40 that is used for driving the second pedal arm 20 to move along the extending direction of the first pedal arm 10, and the drive assembly 40 is in drive connection with the second pedal arm 20. The Drive assembly 40 is set, so that the second pedal arm 20 may be driven to move by means of the drive assembly 40, which can make an operation of adjusting the height of the motor vehicle pedal more convenient and quicker, implement an automatic adjustment operation, and save adjustment time.

The foregoing drive assembly 40 includes a worm assembly 41 and a worm-gear assembly 42. The worm assembly 41 is disposed on the first pedal arm 10 and extends into the axial through hole 11 from the first end of the first pedal arm 10 to press against the connecting end of the second pedal arm 20, so as to drive the second pedal arm 20 to move. The worm-gear assembly 42 extends into the axial through hole 11 from an opening portion disposed on an outer side wall of the first pedal arm 10 and is in drive cooperation with the worm assembly 41.

Preferably, in order that the position of the second pedal arm 20 can be kept unchanged after the second pedal arm 20 is adjusted to an ideal position, in this embodiment of the present invention, the drive assembly 40 has a self-locking state of locking the worm-gear assembly 42 and the worm assembly 41, so that the worm-gear assembly 42 is capable of driving the worm assembly 41 to move forward or backward around an axial direction thereof. Whereas, the worm assembly 41 is incapable of driving the worm-gear assembly 42 to move towards any direction, thereby playing a role of positioning and locking the second pedal arm 20.

Further, the drive assembly 40 further includes a drive motor 43, and a motor shaft of the drive motor 43 is fixedly connected to the worm-gear assembly 42, so as to drive the worm-gear assembly 42 to rotate. The drive motor 43 in this embodiment of the present invention is capable of rotating forward or backward, so as to drive the worm-gear assembly 42 to make forward or backward movement.

In order to save space, according to the present invention, an accommodating space 12 used for accommodating the drive motor 43 is disposed on an outer side surface of the first pedal arm 10. During installation, the drive motor 43 is placed inside the accommodating space 12, the worm-gear assembly 42 is installed on the motor shaft of the drive motor 43, and the worm-gear assembly 42 penetrates, from the accommodating space 12, the opening portion formed at a set position on an outer surface of the first pedal arm 10, and is in drive connection with the worm assembly 41 disposed in the axial through hole 11. It should be noted that the foregoing opening portion and the foregoing accommodating space 12 are correspondingly disposed.

Certainly, the present disclosure is not limited to the foregoing embodiment. In another embodiment, a first buckling and positioning portion is disposed on the foregoing first pedal arm 10, a second buckling and positioning portion is disposed on the second pedal arm 20, the first buckling and positioning portion is cooperatively buckled with the second buckling and positioning portion, so as to fix the second pedal arm 20 onto the first pedal arm 10.

Specifically, the first buckling and positioning portion may be multiple spaced buckling slots disposed on the outer surface of the first pedal arm 10, and the second buckling and positioning portion may be buckling bulges disposed on the second pedal arm 20 and cooperatively buckled with the buckling slots. During adjustment, it only needs to move the second pedal arm 20 to a suitable position and then tightly buckle the buckling bulges with the corresponding buckling slots. In this embodiment, except the foregoing features, other features are the same as those in the foregoing embodiment.

In a third embodiment, the foregoing drive motor may further be connected to a leading screw for driving the leading screw to rotate, so as to drive the second pedal arm 20 to make reciprocating movement along the extending direction of the first pedal arm 10, thereby achieving an objective of changing the height between the pedal arm and the chassis surface. Except the foregoing features, other features are the same as those in the first embodiment.

The present invention further provides a motor vehicle, including the foregoing motor vehicle pedal.

As can be seen from the foregoing description, the foregoing embodiments of the present invention achieve the following technical effects:
A pedal arm is divided into a first pedal arm and a second pedal arm, and the second pedal arm is adjustably disposed on the first pedal arm, which can change a height of the motor vehicle pedal relative to a chassis surface of a motor vehicle by adjusting a relative position between the first pedal arm and the second pedal arm, so that different consumer groups can perform adjustment according to their own usage habits, thereby achieving an objective of improving the comfort of the motor vehicle pedal.

Further, the motor vehicle pedal of the present invention is adjustable in height, so that the pedal is applicable to different vehicle models, which enhances the applicability of the motor vehicle pedal.

## Claims

1. A motor vehicle pedal, comprising a fixed bearing (30) and a pedal arm disposed on the fixed bearing (30), wherein the pedal arm comprises:
a first pedal arm (10); and
a second pedal arm (20), sheathed in the first pedal arm (10) and adjustably disposed along an extending direction of the first pedal arm (10), wherein the motor vehicle pedal further comprises a drive assembly (40), and the drive assembly (40) is in drive connection with the second pedal arm (20),
wherein the drive assembly (40) comprises a worm assembly (41) and a worm-gear assembly (42), two ends of the worm assembly (41) are respectively connected to the first pedal arm (10) and the second pedal arm (20), the worm assembly (41) drives the second pedal arm (20) to move, and the worm-gear assembly (42) is in drive cooperation with the worm assembly (41),
wherein the drive assembly (40) further comprises a drive motor (43), and a motor shaft of the drive motor (43) is fixedly connected to the worm-gear assembly (42), so as to drive the worm-gear assembly (42) to rotate,
wherein an opening portion is disposed on an outer side wall of the first pedal arm (10), and the worm-gear assembly (42) extends inward from the opening portion and is in drive connection with the worm assembly (41),
**characterised in that** an accommodating space (12) used for accommodating the drive motor (43) is placed inside the accommodating space (12) and disposed on an outer side surface of the first pedal arm (10), and the opening portion and the accommodating space (12) are correspondingly disposed.

2. A motor vehicle, comprising a motor vehicle pedal, wherein the motor vehicle pedal is the motor vehicle pedal according to claim 1.

## Patentansprüche

1. Kraftfahrzeug-Pedal, das eine stationäre Lagerung (30) und einen Pedal-Schenkel umfasst, der an der stationären Lagerung (30) angeordnet ist, wobei der Pedal-Schenkel umfasst:
einen ersten Pedal-Schenkel (10); sowie
einen zweiten Pedal-Schenkel (20), der von dem ersten Pedal-Schenkel (10) umhüllt ist und in einer Richtung, in der sich der erste Pedal-Schenkel (10) erstreckt, verstellbar angeordnet ist, wobei das Kraftfahrzeug-Pedal des Weiteren eine Antriebs-Anordnung (40) umfasst und die Antriebs-Anordnung (40) in Antriebs-Verbindung mit dem zweiten Pedal-Schenkel (20) steht,
wobei die Antriebs-Anordnung (40) eine Schnecken-Anordnung (41) sowie eine Schneckenrad-Anordnung (42) umfasst, zwei Enden der Schnecken-Anordnung (41) mit dem ersten Pedal-Schenkel (10) bzw. dem zweiten Pedal-Schenkel (20) verbunden sind, die Schnecken-Anordnung (41) den zweiten Pedal-Schenkel (20) so antreibt, dass er sich bewegt, und die Schneckenrad-Anordnung (42) antreibend mit der Schnecken-Anordnung (41) zusammenwirkt,
die Antriebs-Anordnung (40) des Weiteren einen Antriebs-Motor (43) umfasst und eine MotorWelle des Antriebs-Motors (43) fest mit der Schneckenrad-Anordnung (42) verbunden ist und die Schneckenrad-Anordnung (42) so antreibt, dass sie sich dreht,
ein Öffnungs-Abschnitt an einer Außenseiten-Wand des ersten Pedal-Schenkels (10) angeordnet ist und sich die Schneckenrad-Anordnung (42) von dem Öffnungs-Abschnitt aus nach innen erstreckt und in Antriebs-Verbindung mit der Schnecken-Anordnung (41) steht,
**dadurch gekennzeichnet, dass** ein Aufnahme-Raum (12), der zum Aufnehmen des Antriebs-Motors (43) dient, im Inneren des Aufnahme-Raums (12) positioniert ist und an einer Außenseiten-Fläche des ersten Pedal-Schenkels (10) angeordnet ist, und der Öffnungs-Abschnitt und der Aufnahme-Raum (12) entsprechend angeordnet sind.

2. Kraftfahrzeug, das ein Kraftfahrzeug-Pedal umfasst, wobei das Kraftfahrzeug-Pedal das Kraftfahrzeug-Pedal nach Anspruch 1 ist.

## Revendications

1. Pédale de véhicule automobile comprenant un palier fixe (30) et un bras de pédale disposé sur le palier fixe (30), dans lequel le bras de pédale comprend
un premier bras de pédale (10); et
un second bras de pédale (20), gainé dans le premier bras de pédale (10) et disposé de manière réglable s'étendant le long d'une direction du premier bras de pédale (10), la pédale de véhicule automobile comprenant en outre un ensemble d'entraînement (40), et l'ensemble d'entraînement (40) est en liaison d'entraînement avec le second bras de pédale (20),
dans lequel l'ensemble d'entraînement (40) comprend un ensemble à vis sans fin (41) et un ensemble d'engrenage à vis sans fin (42), deux extrémités de l'ensemble à vis sans fin (41) sont respectivement reliées au premier bras de pédale (10) et au second bras de pédale (20), l'ensemble à vis sans fin (41) entraîne le second bras de pédale (20), et l'ensemble d'engrenage à vis sans fin (42) coopère de manière à entraîner l'ensemble à vis sans fin (41),
dans lequel l'ensemble d'entraînement (40) comprend en outre un moteur d'entraînement (43), et un arbre de moteur du moteur d'entraînement (43) est relié de manière fixe à l'ensemble d'engrenage à vis sans fin (42), de manière à faire tourner l'ensemble d'engrenage à vis sans fin (42),
dans lequel une partie d'ouverture est disposée sur une paroi latérale extérieure du premier bras de pédale (10) et l'ensemble d'engrenage à vis sans fin (42) s'étend vers l'intérieur depuis la partie d'ouverture et est en liaison d'entraînement avec l'ensemble à vis sans fin (41),
**caractérisé en ce qu'**un espace de logement (12) permettant de loger le moteur d'entraînement (43) est placé à l'intérieur de l'espace de logement (12) et disposé sur une surface latérale extérieure du premier bras de pédale (10), et la partie d'ouverture et l'espace de logement (12) sont disposés en conséquence.

2. Véhicule automobile comprenant une pédale de véhicule automobile, dans lequel la pédale de véhicule automobile est la pédale de véhicule automobile selon la revendication 1.
